# EUROPÄISCHE PATENTSCHRIFT

(11) **EP 3 665 004 B1**
(45) Veröffentlichungstag und Bekanntmachung des Hinweises auf die Patenterteilung: **29.09.2021**
(21) Anmeldenummer: 18755418.3
(22) Anmeldetag: 07.08.2018
(51) Int. Cl.: B32B 5/02, B32B 5/18, B32B 5/24, B32B 5/32, B32B 27/06, A47C 27/14, F16L 59/065

(54) **VAKUUMISOLATIONSPANEEL-ANORDNUNG**
VACUUM INSULATION PANEL ARRANGEMENT
AGENCEMENT DE PANNEAU D'ISOLATION SOUS VIDE

(30) Priorität: 07.08.2017 DE 202017004137 U
(43) Veröffentlichungstag der Anmeldung: 17.06.2020
(73) Patentinhaber: va-Q-tec AG, 97080 Würzburg (DE)
(72) Erfinder: BOCK, Tobias, 97318 Biebelried OT Kaltensondheim (DE); NEMETZ, Ivo, 63751 Gelnhausen (DE); KUHN, Joachim, 97074 Würzburg (DE)
(74) Vertreter: Von Rohr Patentanwälte Partnerschaft mbB
(86) Internationale Anmeldenummer: PCT/EP2018/071392
(87) Internationale Veröffentlichungsnummer: WO 2019/030225

(56) Entgegenhaltungen:
- EP-A2- 1 905 405
- DE-A1-102014 007 705
- DE-U1-202014 008 767

## Beschreibung

Die Erfindung betrifft eine Vakuumisolationspaneel-Anordnung mit einem Vakuumisolationspaneel mit zwei einander gegenüberliegenden Außenflächen und diese Außenflächen verbindenden Rändern und mit einer das Vakuumisolationspaneel allseitig eng anliegend umgebenden Schutzschicht.

Ein Vakuumisolationspaneel ist ein normalerweise plattenförmiges Wärmeisolationselement. Dieses ist in verschiedenen Ausführungsformen bekannt (DE 10 2010 019 074 A1). In welcher Konstruktionsweise das Vakuumisolationspaneel ausgebildet ist, ist für die vorliegende Erfindung grundsätzlich unwichtig.

Regelmäßig hat ein Vakuumisolationspaneel einen Grundkörper aus einem offenporigen Werkstoff, der dem Vakuumisolationspaneel die erforderliche mechanische Stabilität gibt. Seine Offenporigkeit gewährleistet eine ausreichende Evakuierbarkeit des Grundkörpers. Dieser Grundkörper ist mit einer gasdichten Folie eng umschlossen. Der von der Folie gebildete, durch den Grundkörper ausgefüllte Innenraum ist evakuiert. Dadurch werden die gewünschten Wärmeisolationseigenschaften des Vakuumisolationspaneels erreicht. Im Einzelnen wird hierzu auch auf die DE 20 2014 008 767 U1 verwiesen, deren Offenbarungsgehalt auch für die vorliegende Vakuumisolationspaneel-Anordnung von Bedeutung ist.

Die bekannte Vakuumisolationspaneel-Anordnung, von der die Erfindung ausgeht (DE 20 2014 008 767 U1), hat zum einen eine aufgeklebte Schutzfolie aus PVC, die gegen mechanische Beaufschlagung mit scharfkantigen Werkzeugen schützt, zum anderen, die Schutzfolie aus PVC komplettierend, eine elastisch polsternde Schutzschicht aus Kunststoff-Weichschaum, insbesondere aus Zellkautschuk.

Die bekannten Vakuumisolationspaneel-Anordnungen werden zur Wärmeisolierung von Maschinen und Anlagen eingesetzt, beispielsweise zur Wärmeisolierung von Speicherbehältern. Die auf einer Außenfläche des Vakuumisolationspaneels befindliche Schutzschicht aus Kunststoff-Weichschaum, insbesondere aus Zellkautschuk, ist beispielsweise geeignet, Unebenheiten einer Oberfläche, an die das Vakuumisolationspaneel angepresst wird, auszugleichen.

Generell bekannt aus der Praxis sind Sitzpolster und Rückenlehnenpolster, die man beispielsweise als Besucher einer Sportveranstaltung mitnimmt, um den harten Holz-Klappsitz im Stadion etwas bequemer werden zu lassen. Diese üblichen Sitzpolster oder Rückenlehnenpolster bestehen komplett aus Kunststoff-Weichschaum, insbesondere aus PVC-Weichschaum. Ihre Polsterwirkung ist häufig gut, die Wärmedämmung lässt aber oft zu wünschen übrig.

Typischerweise ist ein Sitzpolster oder Rücklehenpolster der aus der Praxis bekannten Art in einer eng anliegenden Außenhülle aus einem Gewebe oder Gewirke angeordnet, die ausgewechselt und bei Verschmutzung gewaschen werden kann. Meist ist die Außenhülle an einem Rand offen und dort mit einem Reißverschluss verschlossen.

Bekannt sind für sich ferner Bekleidungsstücke oder Teile von Bekleidungsstücken, z.B. Rückenprotektoren oder Schienbeinschoner, die eine gewisse Steifigkeit mit einer polsternden Wirkung verbinden und dadurch den Körper in entsprechend relevanten Bereichen gegen Schläge o.dgl. schützen.

Schließlich sind bekannt polsternde Einbauten oder Anbauten zur Realisierung eines Aufprallschutzes in Fahrzeugen.

Der Erfindung liegt die Aufgabe zugrunde, eine Vakuumisolationspaneel-Anordnung mit verbesserten Eigenschaften insbesondere für Anwendungen als Sitzpolster oder Rückenlehnenpolster oder für andere passende Anwendungen anzugeben.

Das zuvor aufgezeigte Problem ist bei einer Vakuumisolationspaneel-Anordnung mit den Merkmalen von Anspruch 1 gelöst.

Erfindungsgemäß ist also das Vakuumisolationspaneel selbst komplett in Kunststoff-Weichschaum eingeschäumt. An allen Außenflächen und Rändern befindet sich eine Schicht aus dem gewünschten Kunststoff-Weichschaum.

Ein damit gestaltetes Sitzkissen oder Rückenlehnenkissen hat nicht nur eine vorzügliche Polsterwirkung wie auch die aus dem Stand der Technik bekannten Sitzkissen oder Rückenlehnenkissen, es hat wegen des in dem Kunststoff-Weichschaum innig eingebetteten Vakuumisolationspaneels auch noch eine vorzügliche Wärmeisolierungswirkung.

Bevorzugte Ausgestaltungen und Weiterbildungen sind Gegenstand der Unteransprüche.

Gegenstand der Erfindung ist auch ein Sitzpolster oder Rückenlehnenpolster mit einer entsprechenden Vakuumisolationspaneel-Anordnung oder eine entsprechende Sitzschale der Rückenlehnenschale, wobei dann die Vakuumisolationspaneel-Anordnung ein insgesamt gebogenes Vakuumisolationspaneel, eingebettet in die Schutzschicht aus Kunststoff-Weichschaum, aufweist.

Gegenstand der Erfindung sind auch Bekleidungsstücke oder Teile von Bekleidungsstücken mit einer entsprechenden Vakuumisolationspaneel-Anordnung zum Schutz der das Bekleidungsstück oder den Teil des Bekleidungsstückes tragenden Person in einem entsprechenden Bereich.

Schließlich sind Gegenstand der Erfindung auch polsternde Einbauten oder Anbauten zur Realisierung eines Aufprallschutzes in Fahrzeugen, soweit diese eine entsprechende Vakuumisolationspaneel-Anordnung aufweisen.

Im Folgenden wird die Erfindung nun anhand einer lediglich ein bevorzugtes Ausführungsbeispiel darstellenden Zeichnung näher erläutert. In der Zeichnung zeigt
- Fig. 1: in perspektivischer Ansicht eine Vakuumisolationspaneel-Anordnung gemäß der Erfindung,
- Fig. 2: einen Querschnitt durch die Vakuumisolationspaneel-Anordnung aus Fig. 1 und
- Fig. 3: eine Vakuumisolationspaneel-Anordnung gemäß Fig. 1 innerhalb einer Außenhülle.

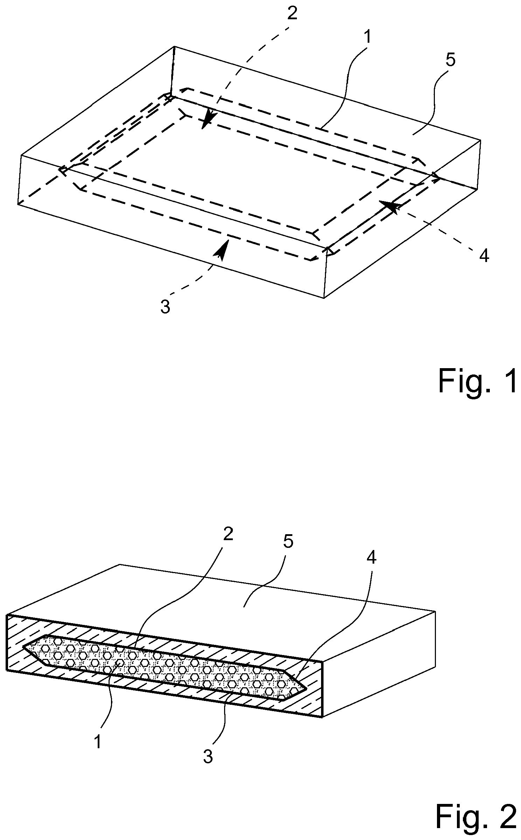

Fig. 1 und 2 zeigen das Grundprinzip der Erfindung, nämlich eine Vakuumisolationspaneel-Anordnung mit einem Vakuumisolationspaneel 1 mit zwei einander gegenüberliegenden Außenflächen 2, 3 und diese Außenflächen 2, 3 verbindenden Rändern 4 und mit einer das Vakuumisolationspaneel 1 allseitig eng anliegend umgebenden Schutzschicht 5. Hier ist vorgesehen, dass das Vakuumisolationspaneel 1 zur Bildung der Schutzschicht 5 komplett in Kunststoff-Weichschaum eingeschäumt ist. Man sieht in Fig. 2 besonders gut die allseitige durchgehende Schutzschicht 5 aus komplett umschäumtem Kunststoff-Weichschaum.

In Fig. 1 kann man gut erkennen, dass es sich hier um eine plattenartige Vakuumisolationspaneel-Anordnung handelt, die als eine Art Sitzpolster eingesetzt werden kann. Vorzugsweise leicht gebogen kann man sie auch als eine Art Rückenlehnenpolster einsetzen. Wichtig ist, dass durch das Vakuumisolationspaneel 1 in der Vakuumisolationspaneel-Anordnung eine sehr gute Wärmeisolierungswirkung erreicht wird und dass durch die Schutzschicht 5 aus Kunststoff-Weichschaum gleichzeitig eine sehr gute Polsterwirkung erreicht wird.

Daten zu Vakuumisolationspaneelen der in Rede stehenden Art findet man beispielsweise in der Ausgangsdruckschrift, der DE 20 2014 008 767 U1, ebenso zum dort genannten Stand der Technik. Daten zu dem für die Schutzschicht 5 zu verwendenden Kunststoff-Weichschaum findet man beispielsweise bei Wikipedia unter dem Stichwort "Schaumstoff" oder auf der Webseite "Spectrum" im dortigen "Lexikon der Chemie" unter "Schaumkunststoffe".

Hinsichtlich der Auswahl des Kunststoff-Weichschaums der Schutzschicht 5 empfiehlt es sich, dass dieser eine Dichte zwischen 10 und 150 kg/m³, vorzugsweise zwischen 30 und 100 kg/m³, aufweist.

Das zuvor beschriebene Raumgewicht, für das bevorzugte Bereich angegeben worden sind, hat nichts damit zu tun, ob es sich um einen festeren oder weniger festen Kunststoff-Weichschaum handelt. Ein schwerer Kunststoff-Weichschaum muss kein sehr fester Kunststoff-Weichschaum sein und umgekehrt. Für die Polsterwirkung ist weniger das Raumgewicht als die sogenannte Eindruckhärte oder Stauchhärte wichtig. Stauchhärte oder Kompressionswiderstand ist der Druck (gemessen in kPa), der notwendig ist, um einen Probekörper mittels eines definierten Eindringkörpers auf 40% seiner ursprünglichen Dicke zusammenzudrücken. Eine Stauchhärte von 50 entspricht einem Druck von 5,0 kPa. Einzelheiten sind in der DIN 53577 festgelegt.

Für den erfindungsgemäßen Kunststoff-Weichschaum empfiehlt sich nach bevorzugter Lehre eine Stauchhärte zwischen 0,5 und 8,0 kPa, vorzugsweise zwischen 1,5 und 6,0 kPa.

Bevorzugte Werkstoffe für den Kunststoff-Weichschaum bei der Vakuumisolationspaneel-Anordnung gemäß der Erfindung sind Polystyrol-Schaum, Zellkautschuk, beispielsweise EPDM, PVC-Weichschaum, Polyethylen-Schaum oder, insbesondere, Polyurethan-Weichschaum.

Ein besonders bevorzugtes Ausführungsbeispiel ist ein Kunststoff-Weichschaum, ausgeführt als Polyurethan- oder Polyethylen-Weichschaum.

Für eine normale Anwendung, bevorzugt als Sitzpolster, empfiehlt es sich, dass die Schutzschicht 5 ohne Belastung auf den Außenflächen 2, 3 eine Dicke von 3 mm bis 25 mm, vorzugsweise von 10 mm bis 15 mm, aufweist und auf den Rändern 4 eine Dicke von 5 mm bis 50 mm, vorzugsweise von 20 mm bis 40 mm, aufweist.

Was die Dicke des Vakuumisolationspaneels 1 als solches betrifft, so empfiehlt sich eine Dicke zwischen 5 mm und 15 mm, insbesondere für den vorliegenden, bevorzugten Anwendungsfall. Im Grundsatz sind natürlich andere Maße denkbar, wenn man andere Anwendungsfälle im Auge hat.

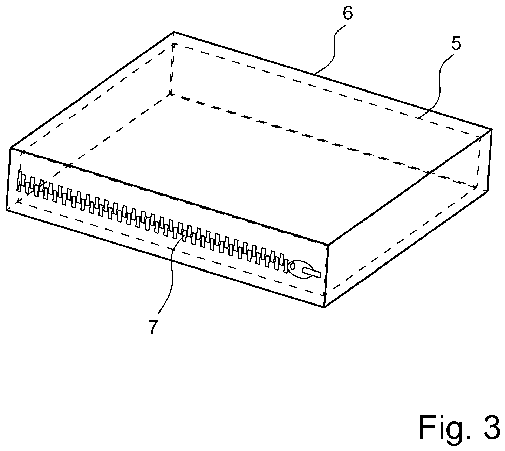

Bei der erfindungsgemäßen Vakuumisolationspaneel-Anordnung empfiehlt es sich schließlich vorzusehen, dass das Vakuumisolationspaneel 1 mit der Schutzschicht 5 in einer eng anliegenden, auswechselbaren Außenhülle 6 aus einem Gewebe, einem Gewirke oder einer Folie angeordnet ist. In Fig. 3 ist eine solche Ausführung dargestellt. Vorne findet man an der Außenhülle 6 einen Reißverschluss 7 zum Verschließen. Nach Öffnen des Reißverschlusses 7 kann man die Außenhülle 6 von der Schutzschicht 5 abziehen und beispielsweise waschen, sofern sie verschmutzt sein sollte.

Gegenstand der Erfindung ist auch ein Sitzpolster oder Rückenlehnenpolster, ausgeführt als Vakuumisolationspaneel-Anordnung nach einem der Ansprüche 1 bis 7.

Gegenstand der Erfindung ist ferner auch eine Sitzschale oder Rückenlehnenschale, ausgeführt als passend gebogene Vakuumisolationspaneel-Anordnung nach einem der Ansprüche 1 bis 7.

Gegenstand der Erfindung ist schließlich auch ein Bekleidungsstück oder ein Teil eines Bekleidungsstückes mit einer Vakuumisolationspaneel-Anordnung nach einem der Ansprüche 1 bis 7.

Gegenstand der Erfindung ist auch ein polsternder Einbau oder Anbau für eine Karosserie eines Kraftfahrzeugs, das eine Vakuumisolationspaneel-Anordnung nach einem der Ansprüche 1 bis 7 aufweist.

### Bezugszeichenliste:

- 1: Vakuumisolationspaneel
- 2: Außenfläche
- 3: Außenfläche
- 4: Ränder
- 5: Schutzschicht
- 6: Außenhülle
- 7: Reißverschluss

## Patentansprüche

1. Vakuumisolationspaneel-Anordnung
auf einem Vakuumisolationspaneel (1) mit zwei einander gegenüberliegenden Außenflächen (2, 3) und diese Außenflächen (2, 3) verbindenden Rändern (4) und mit einer das Vakuumisolationspaneel (1) allseitig eng anliegend umgebenden Schutzschicht (5),
**dadurch gekennzeichnet,**
**dass** zur Bildung der Schutzschicht (5) das Vakuumisolationspaneel (1) komplett in Kunststoff-Weichschaum eingeschäumt ist.

2. Vakuumisolationspaneel-Anordnung nach Anspruch 1, **dadurch gekennzeichnet,**
**dass** der Kunststoff-Weichschaum der Schutzschicht (5) eine Dichte zwischen 10 und 150 kg/m³, vorzugsweise zwischen 30 und 100 kg/m³, aufweist.

3. Vakuumisolationspaneel-Anordnung nach Anspruch 1, **dadurch gekennzeichnet, dass** der Kunststoff-Weichschaum der Schutzschicht eine Stauchhärte zwischen 0,5-8.0 kPa, vorzugsweise zwischen 1,5-6,0 kPa, gemessen nach DIN 53577 bei Zusammendrücken der ursprünglichen Dicke auf 40%, aufweist.

4. Vakuumisolationspaneel-Anordnung nach einem der Ansprüche 1 bis 3, **dadurch gekennzeichnet,**
**dass** die Schutzschicht (5) aus einem Polystyrol-Schaum, einem Zellkautschuk, beispielsweise EPDM, einem PVC-Weichschaum, einem Polyethylen-Schaum oder, insbesondere, einem Polyurethan-Weichschaum besteht.

5. Vakuumisolationspaneel-Anordnung nach einem der Ansprüche 1 bis 4, **dadurch gekennzeichnet,**
**dass** die Schutzschicht (5) ohne Belastung
auf den Außenflächen (2, 3) eine Dicke von 3 mm bis 25 mm, vorzugsweise von 10 mm bis 15 mm, aufweist und
auf den Rändern (4) eine Dicke von 5 mm bis 50 mm, vorzugsweise von 20 mm bis 40 mm, aufweist.

6. Vakuumisolationspaneel-Anordnung nach einem der Ansprüche 1 bis 5, **dadurch gekennzeichnet,**
**dass** das Vakuumisolationspaneel (1) als solches eine Dicke von 5 mm bis 15 mm aufweist.

7. Vakuumisolationspaneel-Anordnung nach einem der Ansprüche 1 bis 6, **dadurch gekennzeichnet,**
**dass** das Vakuumisolationspaneel (1) mit der Schutzschicht (5) in einer eng anliegenden, auswechselbaren Außenhülle (6) aus einem Gewebe, einem Gewirke oder einer Folie angeordnet ist.

8. Sitzpolster oder Rückenlehnenpolster, ausgeführt als Vakuumisolationspaneel-Anordnung nach einem der Ansprüche 1 bis 7.

9. Sitzschale oder Rückenlehnenschale, ausgeführt als passend gebogene Vakuumisolationspaneel-Anordnung nach einem der Ansprüche 1 bis 7.

10. Bekleidungsstück oder Teile eines Bekleidungsstückes, aufweisend eine Vakuumisolationspaneel-Anordnung nach einem der Ansprüche 1 bis 7.

11. Polsternder Einbau oder Anbau für eine Karosserie eines Kraftfahrzeugs, aufweisend eine Vakuumisolationspaneel-Anordnung nach einem der Ansprüche 1 bis 7.

## Claims

1. Vacuum insulation panel arrangement
on a vacuum insulation panel (1) with two outer surfaces (2, 3) lying opposite one another and edges (4) joining these outer surfaces (2, 3) and
with a protective layer (5) surrounding the vacuum insulation panel (1) on all sides in a closely fitting manner,
**characterized in that**
the vacuum insulation panel (1) is completely encapsulated in a flexible plastic foam to form the protective layer (5).

2. Vacuum insulation panel arrangement as claimed in claim 1, **characterized in that** the flexible plastic foam of the protective layer (5) has a density between 10 and 150 kg/m³, preferably between 30 and 100 kg/m³.

3. Vacuum insulation panel arrangement as claimed in claim 1, **characterized in that** the flexible plastic foam of the protective layer has a compression hardness between 0.5-8.0 kPa, preferably between 1.5-6.0 kPa, measured according to DIN 53577 when the original thickness is compressed to 40%.

4. Vacuum insulation panel arrangement as claimed in one of claims 1 to 3, **characterized in that** the protective layer (5) consists of a polystyrene foam, a cellular rubber, for example EPDM, a flexible PVC foam, a polyethylene foam or, in particular, a flexible polyurethane foam.

5. Vacuum insulation panel arrangement as claimed in one of claims 1 to 4, **characterized in that**, without loading, the protective layer (5) has a thickness of 3 mm to 25 mm, preferably of 10 mm to 15 mm, on the outer surfaces (2, 3) and
has a thickness of 5 mm to 50 mm, preferably of 20 mm to 40 mm, on the edges (4).

6. Vacuum insulation panel arrangement as claimed in one of claims 1 to 5, **characterized in that** the vacuum insulation panel (1) itself has a thickness of 5 mm to 15 mm.

7. Vacuum insulation panel arrangement as claimed in one of claims 1 to 6, **characterized in that** the vacuum insulation panel (1) with the protective layer (5) is arranged in a closely fitting, exchangeable outer casing (6) composed of a woven fabric, a knitted fabric or a film.

8. Seat cushion or backrest cushion, configured as a vacuum insulation panel arrangement as claimed in one of claims 1 to 7.

9. Seat shell or backrest shell, configured as a suitably curved vacuum insulation panel arrangement as claimed in one of claims 1 to 7.

10. Article of clothing or parts of an article of clothing having a vacuum insulation panel arrangement as claimed in one of claims 1 to 7.

11. Cushioning interior fitting or fixture for a motor vehicle body, having a vacuum insulation panel arrangement as claimed in one of claims 1 to 7.

## Revendications

1. Disposition des panneaux d'isolation sous vide
sur un panneau d'isolation sous vide (1) avec deux surfaces extérieures opposées (2, 3) et des bords (4) reliant ces surfaces extérieures (2, 3), et
avec une couche de protection (5) entourant étroitement le panneau d'isolation sous vide (1) sur tous les côtés,
**caractérisé en ce que,**
pour former la couche de protection (5), le panneau d'isolation sous vide (1) est entièrement moussé en mousse plastique souple.

2. Disposition des panneaux d'isolation sous vide selon la revendication 1, **caractérisé en ce que**, la mousse plastique souple de la couche de protection (5) a une densité comprise entre 10 et 150 kg/m³, de préférence entre 30 et 100 kg/m³.

3. Disposition des panneaux d'isolation sous vide selon la revendication 1, **caractérisé en ce que**, la mousse plastique souple de la couche de protection présente une résistance à l'écrasement comprise entre 0,5 et 8,0 kPa, de préférence entre 1,5 et 6,0 kPa, mesurée selon la norme DIN 53577 lorsque l'épaisseur initiale est comprimée à 40%.

4. Disposition des panneaux d'isolation sous vide selon l'une quelconque des revendications 1 à 3, **caractérisé en ce que**, la couche de protection (5) est constituée d'une mousse de polystyrène, d'un caoutchouc cellulaire, par exemple EPDM, d'une mousse souple de PVC, d'une mousse de polyéthylène ou, en particulier, d'une mousse souple de polyuréthane.

5. Disposition des panneaux d'isolation sous vide selon l'une quelconque des revendications 1 à 4, **caractérisé en ce que**, la couche de protection (5) sans charge a une épaisseur sur les surfaces extérieures (2, 3) de 3 mm à 25 mm, de préférence de 10 mm à 15 mm, et
sur les bords (4) a une épaisseur de 5 mm à 50 mm, de préférence de 20 mm à 40 mm.

6. Disposition des panneaux d'isolation sous vide selon l'une quelconque des revendications 1 à 5, **caractérisé en ce que**, le panneau d'isolation sous vide (1) en tant que tel a une épaisseur de 5 mm à 15 mm.

7. Disposition des panneaux d'isolation sous vide selon l'une quelconque des revendications 1 à 6, **caractérisé en ce que**, le panneau d'isolation sous vide (1) avec la couche de protection (5) est disposé dans une gaine extérieure (6) moulant et remplaçable faite d'un tissu, d'un tricot ou d'un film.

8. Coussin de siège ou coussin de dossier réalisé en tant que disposition de panneaux d'isolation sous vide selon l'une quelconque des revendications 1 à 7.

9. Coque de siège ou coque de dossier réalisée sous la forme d'une disposition de panneaux d'isolation sous vide convenablement incurvés selon l'une quelconque des revendications 1 à 7.

10. Vêtement ou parties de vêtement comprenant une disposition de panneaux d'isolation sous vide selon l'une quelconque des revendications 1 à 7.

11. Installation de rembourrage ou attachement pour une carrosserie de véhicule automobile, comprenant une disposition de panneaux d'isolation sous vide selon l'une quelconque des revendications 1 à 7.
